# EUROPEAN PATENT APPLICATION

(11) **EP 4 730 475 A1**
(43) Date of publication of application: **22.04.2026**
(21) Application number: 24862806.7
(22) Date of filing: 04.09.2024
(51) Int. Cl.: H01M 10/12, H01M 4/14, H01M 4/62

(54) **LIQUID LEAD STORAGE BATTERY**

(30) Priority: 08.09.2023 JP 2023146206
(71) Applicant: GS Yuasa International Ltd., Kisshoin, Minami-ku, Kyoto-shi, Kyoto 601-8520 (JP)
(72) Inventor: KAGOHASHI Hiroki, Kyoto-shi, Kyoto 601-8520 (JP)
(74) Representative: Isarpatent
(86) International application number: PCT/JP2024/031651
(87) International publication number: WO 2025/053154

(57) **Abstract**

A flooded-type lead-acid battery includes an element, an electrolyte solution, and a cell chamber that stores the element and the electrolyte solution. The element includes a positive electrode plate, a negative electrode plate, and a separator interposed between the positive electrode plate and the negative electrode plate. The positive electrode plate includes a positive electrode material. The negative electrode plate includes a negative electrode material. The negative electrode material contains an organic expander having a sulfur element content of 2000 µmol/g or more. In a cross section, parallel to the bottom part of the cell chamber, of the flooded-type lead-acid battery, the ratio Ra (= Se/Sg) of the area Se (= S1 - Sg), which is obtained by subtracting the cross-sectional area Sg of the element from the cross-sectional area S1 inside the cell chamber, to the cross-sectional area Sg of the element is 0.20 or less.

## Description

### TECHNICAL FIELD

The present invention relates to a flooded-type lead-acid battery.

### BACKGROUND ART

Lead-acid batteries are in use for various applications, including automotive and industrial applications. The lead-acid battery includes a negative electrode plate, a positive electrode plate, a separator (or a mat), an electrolyte solution, and the like. Each plate includes a current collector and an electrode material. From the viewpoint of improving the performance of the lead-acid battery, various attempts have been made, such as improving the structure of the battery, using additives for the plate, and adjusting the amount of the electrode material or the electrolyte solution.

Patent Document 1 proposes a lead-acid battery including a container which includes a cell chamber; an element being provided in the cell chamber, and including a separator, and a positive electrode plate and a negative electrode plate that are alternately stacked with the separator disposed therebetween; and an electrolyte solution stored in the cell chamber, in which the positive electrode plate includes: a positive electrode material filled portion including a positive electrode material; a positive current collector supporting the positive electrode material filled portion; and a positive electrode lug part provided on an upper peripheral portion of the current collector, the negative electrode plate includes: a negative electrode material filled portion including a negative electrode material; a negative current collector supporting the negative electrode material filled portion; and a negative electrode lug part provided on an upper peripheral portion of the current collector, S1/V1 is 89 cm⁻¹ or more, wherein S1 represents the total surface area of the positive electrode material filled portion and the negative electrode material filled portion and V1 represents the apparent total volume of the positive electrode material filled portion and the negative electrode material filled portion, and p1/n1 is 1.35 or more, wherein p1 represents the mass of the positive electrode material and n1 represents the mass of the negative electrode material.

Patent Document 2 proposes a sealed lead-acid battery using fine glass fibers between a positive electrode plate and a negative electrode plate, in which the ratio (X/Y) of the width dimension (X) of a main surface of the positive electrode plate and/or the negative electrode plate to the width dimension (Y) between inner walls of a container perpendicular to a plate main surface of a container storing these plates is 0.92 or more.

Patent Document 3 proposes a sealed lead-acid battery having a structure in which almost all the electrolyte solution is retained in an element including a porous positive electrode plate containing lead dioxide as a main component, a porous negative electrode plate containing metal lead as a main component, and a separator containing fine glass fibers, fine polymer fibers, or fine silica powder as a main component, in which when the thickness of the element is T, the width of the positive electrode plate configuring the element is W, and the height of the positive electrode plate is H, the electrolyte solution having a volume of corresponding to 20% or more of the volume of the element represented by W × H × T is retained in the positive electrode plate.

Patent Document 4 proposes a lead-acid battery including a positive electrode plate, a negative electrode plate, and an electrolyte solution, in which the negative electrode plate includes a negative electrode material, the ratio of the theoretical capacity of an electrolyte solution in a single cell to the theoretical capacity of a negative electrode in the single cell [theoretical capacity of an electrolyte solution in a single cell/theoretical capacity of a negative electrode in the single cell] is 45% or more in percentage, the negative electrode material contains an organic expander, the negative electrode material contains barium sulfate, and the content of sulfur element (S element) in the organic expander is more than 3000 µmol/g.

### PRIOR ART DOCUMENTS

### PATENT DOCUMENTS

Patent Document 1: WO 2017/099144 A
Patent Document 2: JP-A-06-314572
Patent Document 3: JP-A-04-104476
Patent Document 4: JP-A-2018-18747

### SUMMARY OF THE INVENTION

### PROBLEMS TO BE SOLVED BY THE INVENTION

The negative electrode plate of the lead-acid battery may contain an organic expander. Examples of the organic expander include lignin compounds and synthetic organic expanders. The synthetic organic expander has a relatively high sulfur element content (for example, 2000 µmol/g or more). When a synthetic organic expander is used, excellent high-temperature resistance is easily obtained as compared with the case of using a lignin compound. However, in a flooded-type lead-acid battery, there is a contradiction that the amount of decrease in the electrolyte solution increases when an organic expander having a high sulfur element content (for example, 2000 µmol/g or more) is used.

### MEANS FOR SOLVING THE PROBLEMS

One aspect of the present disclosure relates to a flooded-type lead-acid battery,
the flooded-type lead-acid battery including: an element, an electrolyte solution, and a cell chamber that stores the element and the electrolyte solution.

The element includes a positive electrode plate, a negative electrode plate, and a separator interposed between the positive electrode plate and the negative electrode plate.

The positive electrode plate contains a positive electrode material.

The negative electrode plate contains a negative electrode material.

The negative electrode material contains an organic expander having a sulfur element content of 2000 µmol/g or more.

In a cross section, parallel to the bottom part of the cell chamber, of the flooded-type lead-acid battery, the ratio Ra (= Se/Sg) of the area Se (= S1 - Sg), which is obtained by subtracting the cross-sectional area Sg of the element from the cross-sectional area S1 inside the cell chamber, to the cross-sectional area Sg of the element is 0.20 or less.

### ADVANTAGES OF THE INVENTION

In the flooded-type lead-acid battery, the amount of decrease in the electrolyte solution can be reduced.

### BRIEF DESCRIPTION OF THE DRAWINGS

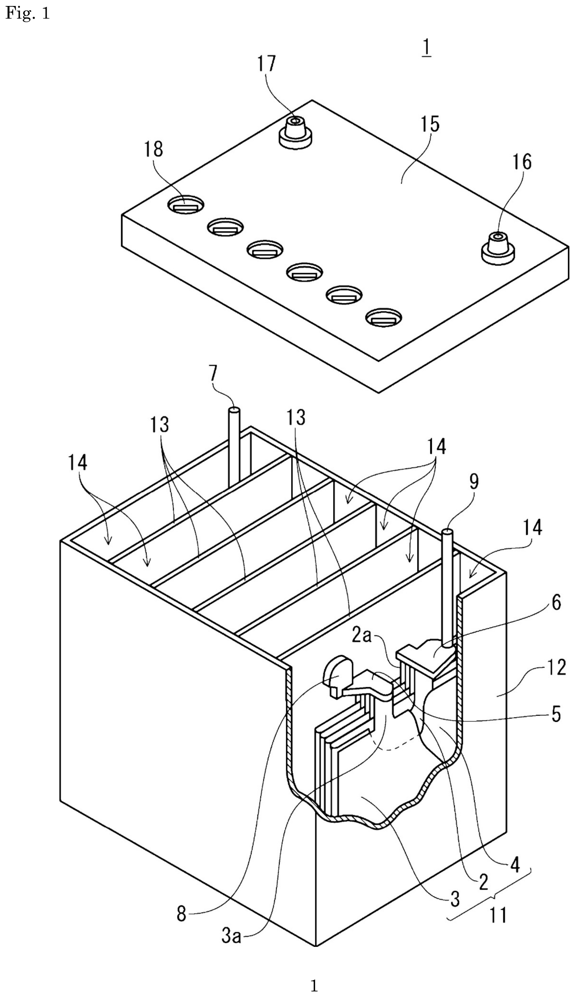

Fig. 1 is a partially cutaway exploded perspective view schematically showing an appearance and an internal structure of a flooded-type lead-acid battery according to one aspect of the present invention.

### MODE FOR CARRYING OUT THE INVENTION

Organic expanders having a high sulfur element content (for example, a sulfur element content of 2000 µmol/g or more) exhibit excellent high-temperature resistance as compared with organic expanders having a low sulfur element content (for example, a sulfur element content of less than 2000 µmol/g) such as lignin compounds. Hereinafter, an organic expander having a sulfur element content of 2000 µmol/g or more may be referred to as a first organic expander, and an organic expander having a sulfur element content of less than 2000 µmol/g may be referred to as a second organic expander. The reason why excellent high-temperature resistance can be obtained when the first organic expander is used is considered that in a high-temperature environment, the first organic expander itself is less likely to be deteriorated, the effect of the first organic expander on suppression of deterioration of the negative electrode material is high, and a large specific surface area of the negative electrode material is maintained, so that excellent discharge performance can be obtained.

Meanwhile, when the first organic expander is used, the reactivity with protons at the time of overcharge is high and the hydrogen gas generation amount is large, as compared with the case where the second organic expander is used, as a result of which the decrease in the electrolyte solution becomes remarkable. Hereinafter, the decrease in the electrolyte solution may be referred to as "electrolyte solution decrease", and the amount of decrease in the electrolyte solution may be referred to as "amount of electrolyte solution decrease". In the flooded-type lead-acid battery, water addition is necessary. When the amount of electrolyte solution decrease becomes significant due to the use of the first organic expander, the frequency of water addition increases, and maintenance becomes complicated.

The flooded-type lead-acid battery is sometimes used in a poor charged state called partial state of charge (PSOC). When the lead-acid battery is used at PSOC, stratification is prone to proceed gradually in which the electrolyte solution density in an upper part of the battery decreases, and the electrolyte solution density in a lower part of the battery increases. As the stratification proceeds, lead sulfate remarkably accumulates in a lower part of the negative electrode plate, and sulfation in which crystals of lead sulfate are generated is likely to occur. As a result, the capacity is reduced, and the plate is deteriorated due to an uneven charge-discharge reaction, whereby the life of the lead-acid battery is shortened. In the present specification, the idling stop may be simply referred to as IS. Examples of the IS application include idle reduction system vehicles. In such applications, high life performance at PSOC is required. The life performance at PSOC may be hereinafter referred to as PSOC life performance.

In view of the above, (1) a flooded-type lead-acid battery according to one aspect of the present invention includes an element, an electrolyte solution, and a cell chamber storing the element and the electrolyte solution. The element includes a positive electrode plate, a negative electrode plate, and a separator interposed between the positive electrode plate and the negative electrode plate. The positive electrode plate contains a positive electrode material. The negative electrode plate contains a negative electrode material. The negative electrode material contains an organic expander having a sulfur element content of 2000 µmol/g or more (that is, a first organic expander). In a cross section, parallel to the bottom part of the cell chamber, of the flooded-type lead-acid battery, the ratio Ra (= Se/Sg) of the area Se (= S1 - Sg), which is obtained by subtracting the cross-sectional area Sg of the element from the cross-sectional area S1 inside the cell chamber, to the cross-sectional area Sg of the element is 0.20 or less. The flooded-type lead-acid battery may be called a vent-type lead-acid battery.

In the case of using the first organic expander, the amount of electrolyte solution decrease generally increases as compared with the case of using the second organic expander. In the flooded-type lead-acid battery according to one aspect of the present invention, by setting Ra ≤ 0.20, the amount of electrolyte solution decrease in the case of using the first organic expander is significantly reduced, and the amount of electrolyte solution decrease can be reduced more than that in the case of using the second organic expander.

In the lead-acid battery according to one aspect of the present invention, it is considered that the amount of electrolyte solution decrease is reduced by the following (a) and (b).
(a) When Ra ≤ 0.20 is satisfied, a gas absorption reaction occurs although the lead-acid battery is a flooded-type lead-acid battery.
(b) The gas absorption efficiency of the first organic expander is higher than the gas absorption efficiency of the second organic expander.

With respect to the ratio Ra in the above (a), the area (= Se = S1 - Sg) obtained by subtracting the cross-sectional area of the element from the cross-sectional area inside the cell chamber corresponds to the cross-sectional area of the electrolyte solution present outside the outer edge of the element (outside the element) in the above cross section (in other words, the electrolyte solution surrounding the element in the cell chamber in which the element is stored). Thus, it can be said that when Ra ≤ 0.20, the amount of the electrolyte solution present outside the element is relatively small as compared with the case of Ra > 0.20. In the case of Ra ≤ 0.20, as compared with the case of Ra > 0.20, the amount of oxygen that is generated in the positive electrode plate and transferred to the electrolyte solution present outside the element is small, so that a high concentration of oxygen can be retained between the electrodes. For that reason, it is considered that when Ra ≤ 0.20, more oxygen is supplied to the negative electrode plate than in the case of Ra > 0.20, and thus a gas absorption reaction has occurred although the battery is a flooded-type battery. The cross-sectional area S1 inside the cell chamber corresponds to the area of the region surrounded by the inner edge of the cell chamber in the above cross section.

With respect to the above (b), in the case of using the first organic expander as compared with the case of using the second organic expander, the organic expander is less likely to aggregate on the surface of the negative electrode plate, in addition to the large specific surface area of the negative electrode material. As a result, it is considered that in the case of the first organic expander as compared with the case of the second organic expander, the movement of oxygen in the negative electrode plate is less likely to be hindered, and thus the gas absorption efficiency is increased.

In the flooded-type lead-acid battery according to one aspect of the present invention, since the negative electrode material contains the first organic expander, higher high-temperature resistance can be obtained than in the case where the negative electrode material contains the second organic expander. Thus, even when discharge at a high rate is performed after overcharge at a high temperature (for example, 50°C or more and 80°C or less), deterioration of the negative electrode material is suppressed, so that a long discharge duration time can be secured. Therefore, it is possible to achieve both high high-temperature resistance and an excellent electrolyte solution decrease suppression effect.

In addition, in the case of Ra ≤ 0.20, the PSOC life performance is greatly improved as compared with the case of Ra > 0.20. The wall surface (side wall or partition) of the cell chamber is close to the periphery of the element, and the volume in which the electrolyte solution can be retained is limited. In the case of Ra ≤ 0.20, since the amount of the electrolyte solution present outside the element is relatively small, upward convection of the electrolyte solution between the element and the container wall generated during charge is easily blocked. Thus, it is considered that the stratification is suppressed and the deterioration of the plate is suppressed, so that the PSOC life performance is improved.

(2) In the above (1), in the above cross section, the ratio Rb (= Sp/S1) of the cross-sectional area Sp of the positive electrode plate to the cross-sectional area S1 inside the cell chamber may be 0.30 or more. In this case, the PSOC life performance is significantly improved. This is considered to be because stratification is suppressed and the life factor is no longer stratification. More specifically, it is considered that the reason is as follows.

The stratification proceeds during charge through the following processes (i) to (iv).
(i) The lead sulfate is oxidized to generate sulfuric acid inside the plate.
(ii) Sulfuric acid moves inside the plate to an interface between the plate and the electrolyte solution.
(iii) The sulfuric acid moves from the inside to the outside of the plate.
(iv) Natural convection occurs due to the density difference of the electrolyte solution, and sulfuric acid settles.

In the positive electrode plate, the internal structure of the plate is finer than that of the negative electrode plate, so that sulfuric acid is less likely to move inside the plate. Thus, when the ratio Rb is increased, the process of (ii) is suppressed, and stratification can be reduced. In addition, in the flooded-type lead-acid battery according to one aspect of the present invention, it is considered that since Ra ≤ 0.2, natural convection due to a density difference of the electrolyte solution is suppressed and high concentration sulfuric acid generated during charge is less likely to settle. Thus, the process of (iv) is suppressed, and stratification can be reduced.

(3) In the above (2), Rb may be 0.32 or more. In this case, the PSOC life performance can be further improved.

(4) In any one of the above (1) to (3), the ratio (= Cn/Cp) of the theoretical capacity Cn of the negative electrode material to the theoretical capacity Cp of the positive electrode material may be more than 0.8. In this case, the amount of electrolyte solution decrease can be further reduced. This is considered to be because the gas absorption efficiency in the negative electrode plate further increases as Cn increases.

(5) In any one of the above (1) to (4), the ratio (= Cn/Cp) of the theoretical capacity Cn of the negative electrode material to the theoretical capacity Cp of the positive electrode material may be 1.3 or less. Even when the ratio Cn/Cp increases, the electrolyte solution decrease suppression effect reaches a plateau. When Cn/Cp ≤ 1.3, a higher electrolyte solution decrease suppression effect can be obtained. In addition, a higher low rate discharge capacity tends to be obtained.

The element usually includes a plurality of positive electrode plates, a plurality of negative electrode plates, and a separator interposed between the positive electrode plate and the negative electrode plate. The positive electrode plate and the negative electrode plate are alternately stacked with the separator interposed therebetween. The width direction (hereinafter, referred to as an "x direction") of the element is a direction orthogonal to the stacking direction (hereinafter, referred to as a "y direction") of the positive electrode plate, the negative electrode plate, and the separator, and orthogonal to the up-down direction (vertical direction). The up-down direction (vertical direction) is defined as a z direction. Each direction is based on an arrangement direction when the lead-acid battery is used.

The flooded-type lead-acid battery usually includes a container. The container includes a bottom part, a side wall rising from a peripheral edge of the bottom part, and a lid part closing an opening end part of the side wall. The inside of the container may be divided into a plurality of spaces (cell chambers) by partitions. For example, the inside of the container may be divided into a plurality of (for example, six) spaces by partitions parallel to each other. The plurality of partitions may cross each other, and the inside of the container may be divided into a plurality of (for example, four or more) spaces. When the container is not divided into a plurality of cell chambers or when the container does not include a cell chamber, the container is regarded as one cell chamber. For example, a dimension X of each cell chamber in the x direction (width direction of the element) is larger than a dimension (group length) Y of the element in the y direction (stacking direction). Hereinafter, each parameter may be determined in each of the plurality of cell chambers and the average value may be calculated.

A dimension X in the x direction and a dimension Z in the z direction of the element are regulated by a dimension (x) in the x direction and a dimension (z) in the z direction of the plate. The dimension X of the element may be regarded as the dimension (x) of the plate. The dimension (x1) of the positive electrode plate in the x direction and the dimension (x2) of the negative electrode plate in the x direction are usually substantially the same. When (x1) and (x2) are different from each other, the average value of (x1) and (x2) may be defined as (x). The dimension Y of the element in the y direction corresponds to an interval between portions disposed on the outermost sides in the stacking direction of two members (a positive electrode plate, a negative electrode plate, or a separator) disposed on the outermost sides in the stacking direction. The cross-sectional area Sg of the element is represented by X × Y.

However, when there is a rib on the surface of the container facing the element, the separator is disposed on the outermost side in the stacking direction, there is a rib on the surface of the separator facing the container, and the group length Y is larger than the distance between the tips of the ribs facing each other in the container, the distance between the tips of the ribs is defined as the group length Y.

Hereinafter, the flooded-type lead-acid battery according to one aspect of the present invention is described more specifically including the above (1) to (5). At least one selected from the components described below can be arbitrarily combined with at least one of the above (1) to (5) relating to the flooded-type lead-acid battery according to one aspect of the present invention as long as the combination is technically possible.

### [Flooded-Type Lead-Acid Battery]

In the flooded-type lead-acid battery according to one aspect of the present invention, the ratio Ra (= (S1 - Sg)/Sg = Se/Sg) is 0.20 or less. When the ratio Ra ≤ 0.20, the amount of electrolyte solution decrease can be reduced even though the first organic expander is used. Also, since stratification is suppressed, high PSOC life performance is obtained. In addition, high high-temperature resistance is obtained by using the first organic expander. From the viewpoint of easily adjusting the balance between the electrolyte solution and the electrode material, the ratio Ra may be 0.10 or more or 0.12 or more.

The ratio Rb (= Sp/S1) may be 0.30 or more or 0.32 or more. The cross-sectional area (Sp) of the positive electrode plate is the sum of the cross-sectional areas of all the positive electrode plates included in one element stored in the cell chamber. The fact that the cross-sectional area of the positive electrode plate is large means that the volume of the positive electrode plate is large. When the ratio Rb is 0.30 or more or 0.32 or more, it can be said that the positive electrode plate is designed such that the volume of the positive electrode plate in the element is as large as possible.

Each of the ratio Ra and the ratio Rb is determined in a portion parallel to the bottom part of the cell chamber (or the container) of the lead-acid battery in a full charged state and at a height of 4.5 cm to 5.5 cm from the bottom part (more specifically, the inner bottom surface) of the cell chamber. Because such a determination method is used, a cross section parallel to the bottom part of the cell chamber for which the ratio Ra and the ratio Rb are to be determined is treated in the present specification as a cross section of the flooded-type lead-acid battery at a position parallel to the bottom part of the cell chamber of the lead-acid battery in a full charged state and at a height of 5 cm from the bottom part (more specifically, the inner bottom surface) of the cell chamber.

### (Method for Determining Ra)

More specifically, the ratio Ra is determined by the following procedures. First, the cross-sectional area S1 inside the cell chamber (or the container) is determined by the following procedures. After the element and the electrolyte solution are taken out from the container, the container is washed with water, dried, then placed on a flat surface, and filled with water to a position parallel to the bottom part of the container and at a height of 4.5 cm from the bottom part. Next, water is added to a position of a height of 5.5 cm from the bottom part, and the volume (cm³) of the added water is determined. The cross-sectional area S1 (cm²) inside the container is determined by dividing the volume of the added water by the height of 1 cm. When the container is divided into a plurality of cells, the cross-sectional area S1 (cm²) inside each cell chamber is determined by dividing the cross-sectional area (cm²) inside all the cell chambers determined similarly to the case of the container by the number of the cell chambers. In the lead-acid battery, when a portion other than the element or the electrolyte solution (for example, other member such as a spacer or a hollow portion (such as a space not filled with an electrolyte solution)) is present inside the container or the cell chamber, the cross-sectional area S1 inside the container or the cell chamber is determined by the above procedures in a state where the portion is present.

The element taken out from the lead-acid battery in a full charged state is disassembled into a positive electrode plate, a negative electrode plate, and a separator, and the thickness of the positive electrode plate, the thickness of the negative electrode plate, and the total thickness of the separator are determined.

The thickness of each of the positive electrode plate and the negative electrode plate is determined by the following procedures. All the positive electrode plates and the negative electrode plates are taken out from the element. The thicknesses of all the positive electrode plates included in the element are measured with a caliper and averaged to determine the thickness of the positive electrode plate. In a lead-acid battery including a plurality of elements, the thickness (average value) of the positive electrode plate is determined by obtaining and averaging the thicknesses of the positive electrode plates in one element located at the end part and in one element located near the center. The thickness of the negative electrode plate is determined in accordance with the case of the positive electrode plate.

The total thickness t of the separators in the element is a value (unit: mm) obtained by measuring the thickness of every separator present between the positive electrode plate and the negative electrode plate adjacent to each other in the element and summing the measured thicknesses. The thickness of the separator is measured by a caliper. When the separator includes a rib (specifically, a first rib, or a first rib and a second rib) at a portion facing the electrode material, the thickness of the separator is measured at a portion where the rib is present. When the positions of the first rib and the second rib are misaligned, a caliper is used to measure the sum s1 of the thickness of the base part and the height of the first rib at the portion of the first rib, measure the sum s2 of the thickness of the base part and the height of the second rib at the portion of the second rib, and measure the thickness t_{b} of only the base part, and the thickness of the separator is determined from s1 + s2 - t_{b}. The thickness of the separator is measured at a plurality of positions (for example, five locations) in the element and averaged.

A sample of the separator for measurement (sample A) is prepared by removing sulfuric acid through washing with water from the separator taken out from the lead-acid battery in a full charged state. The size of the separator is measured, within 10 minutes immediately after water washing, in a state where the separator is wet with water.

However, the thickness of each of the positive electrode plate, the negative electrode plate, and the separator is determined by using a caliper at a position corresponding to a position of a height of 5 cm from the bottom part (more specifically, the inner bottom surface) of the cell chamber (or the container).

The thickness of the positive electrode plate × the number of the positive electrode plates, the thickness of the negative electrode plate × the number of the negative electrode plates, and the total thickness of the separator × the number of the separators present between the positive electrode plate and the negative electrode plate (in the case of a bag-shaped separator, the total thickness of the separator × the number of the bag-shaped separators × 2) are determined, and the determined values are summed. Accordingly, the thickness (dimension Y) of the element in the stacking direction (y direction) is determined. Subsequently, the width (dimension in the x direction) of the plate at a position of a height of 5 cm from the bottom part (more specifically, the inner bottom surface) of the cell chamber (or the container) is measured with a scale. When the widths of the positive electrode plate and the negative electrode plate are different from each other, the average value of the widths is determined and taken as the width of the plate (dimension of the element in the x direction). The cross-sectional area Sg of the element is determined by multiplying the width of the plate by the thickness (dimension y) of the element in the stacking direction.

From S1 and Sg, Se = S1 - Sg is determined. The ratio Ra is determined by dividing Se by Sg.

The cross-sectional area Se of the electrolyte solution present outside the element is a difference (Se = S1 - Y × (x)) between the cross-sectional area (S1) inside the cell chamber and the cross-sectional area (Sg = Y × (x)) of the element. That is, the ratio Ra is represented by (S1 - Y × (x))/(Y × (x)) = (S1 - Sg)/Sg = Se/Sg.

When the ratio Ra is determined, the following points are noted.

Even when a pressure in the thickness direction is applied to the element, a gap may be present between the element and the container. For example, when the member disposed on the outermost side is the separator, there is a rib on the outer surface of the separator, and the rib faces the side wall or the partition of the container, the height of the rib of the separator is not included in the dimension of the element in the y direction. Meanwhile, when the tip of the rib is in contact with the side wall or the partition, the height of the rib regulates the dimension of the cross-sectional area Sg of the element in the y direction. Since the rib of the separator has a certain degree of flexibility, the rib may be deformed due to being pushed by the side wall or the partition. In this case, the height of the rib after deformation regulates the dimension of the cross-sectional area Sg of the element in the y direction.

Similarly, when the dimension of the cross-sectional area Sg of the element in the y direction is determined, in a case where there is a rib on the side wall or the partition of the container, the height of the rib is not included in the dimension in the y direction. When both the side wall or the partition and the separator include ribs, and the tips of the ribs are in contact with the side wall or the partition, the sum of the height of the rib of the separator (when the rib is deformed, the height of the rib after deformation) and the height of the rib of the side wall or the partition regulates the dimension of the cross-sectional area Sg of the element in the y direction.

### (Method for Determining Rb)

Rb is expressed by the ratio (= Sp/S1) of the cross-sectional area (Sp) of the positive electrode plate to the cross-sectional area (S1) inside the cell chamber in the above cross section. The cross-sectional area Sp of the positive electrode plate is determined, using the dimension (x1) of the positive electrode plate in the x direction, the thickness (d) of the positive electrode plate, and the number (n) of positive electrodes included in one element, from Sp = x1 × d × n. S1 is determined from an equation of Se: Se = S1 - Y × x used when the ratio Ra is determined, the Se value determined above, a dimension Y of the element in the y direction, and a dimension x of the plate in the x direction. The thickness d of the positive electrode plate is determined by the procedures described for the ratio Ra.

In the calculation of the ratio Rb, the thickness of the positive electrode plate, the dimensions of the element or the plate, and the like are measured at a position corresponding to a height of 5 cm from the bottom part (more specifically, the inner bottom surface) of the cell chamber (or the container).

In the flooded-type lead-acid battery including a plurality of cells, each of the ratio Ra and the ratio Rb is obtained by respectively averaging the ratios Ra and the ratios Rb determined for the cell located at the end part and the cell located near the center.

The flooded-type lead-acid battery includes at least one cell. The cell includes an element, an electrolyte solution, and a cell chamber that stores the element and the electrolyte solution. The element includes a positive electrode plate, a negative electrode plate, and a separator interposed between the positive electrode plate and the negative electrode plate. Hereinafter, the components of the flooded-type lead-acid battery are described more specifically.

### (Positive Electrode Plate)

As the positive electrode plate, for example, a paste type positive electrode plate is used. The paste type positive electrode plate includes, for example, a positive current collector and a positive electrode material.

The positive current collector may be formed by casting lead (Pb) or a lead alloy, or may be formed by processing a lead sheet or a lead alloy sheet. Examples of the processing method include expanding and punching. It is preferable to use a grid-like current collector as the positive current collector because the positive electrode material is easily supported.

As the lead alloy used for the positive current collector, a Pb-Sb-based alloy, a Pb-Ca-based alloy, or a Pb-Ca-Sn-based alloy is preferred in terms of corrosion resistance and mechanical strength. The positive current collector may include a surface layer. The surface layer and the inner layer of the positive current collector may have different compositions. The surface layer may be formed so as to cover the entire positive current collector, or may be formed on a part of the positive current collector. The surface layer may be formed only on the grid part, only on the lug part, or only on the frame rib part of the positive current collector.

The positive electrode material contained in the positive electrode plate usually contains a positive active material (lead dioxide or lead sulfate) that exhibits a capacity through a redox reaction. The positive electrode material may contain another additive, if necessary.

A non-chemically converted paste type positive electrode plate is obtained by filling a positive current collector with a positive electrode paste, and curing and drying the paste. The positive electrode paste is prepared by mixing lead powder, and another additive (such as a reinforcing material (for example, resin fibers)), water, and sulfuric acid. Thereafter, the non-chemically converted positive electrode plate is chemically converted, obtaining positive electrode plate.

The chemical conversion of the non-chemically converted positive electrode plate may be performed, for example, by storing the element including the non-chemically converted positive electrode plate and the electrolyte solution containing sulfuric acid in the container of the lead-acid battery and charging the element in a state where the electrolyte solution is soaked into the element. However, the chemical conversion may be performed before the lead-acid battery or the element is assembled.

### (Negative Electrode Plate)

The negative electrode plate contains a negative electrode material. The negative electrode plate usually contains a negative current collector.

The negative current collector may be formed by casting lead (Pb) or a lead alloy, or may be formed by processing a lead sheet or a lead alloy sheet. Examples of the processing method include expanding and punching. It is preferable to use a grid-like current collector as the negative current collector because the negative electrode material is easily supported.

The lead alloy used for the negative current collector may be any of a Pb-Sb-based alloy, a Pb-Ca-based alloy, or a Pb-Ca-Sn-based alloy. The lead or lead alloys may further contain, as an additive element, at least one selected from the group consisting of Ba, Ag, Al, Bi, As, Se, Cu, and the like.

The negative current collector may include a surface layer. The surface layer and the inner layer of the negative current collector may have different compositions. The surface layer may be formed so as to cover the entire negative current collector, or may be formed on a part of the negative current collector. The surface layer may be formed, for example, only on the grid part, only on the lug part, or only on the frame rib part of the negative current collector.

The negative electrode material contains a first organic expander. The negative electrode material contains a negative active material (lead or lead sulfate) that exhibits a capacity through a redox reaction. The negative electrode material may contain an additive other than the first organic expander, if necessary. Examples of the additive include a second organic expander, a carbonaceous material, and barium sulfate. The negative electrode material may contain a reinforcing material (such as resin fibers) in addition to these additives.

### (First Organic Expander)

The organic expanders are usually roughly classified into lignin compounds and synthetic organic expanders. It can also be said that the synthetic organic expanders are organic expanders other than lignin compounds. The first organic expander is often a synthetic organic expander.

The synthetic organic expander is an organic compound (for example, an organic polymer) containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt. The first organic expander preferably contains sulfur element at least in the form of a sulfonic acid group or a salt thereof.

As the first organic expander, the case of using a condensate containing at least a unit of an aromatic compound is also preferable. Examples of such a condensate include condensates of an aromatic compound with an aldehyde compound (such as at least one selected from the group consisting of aldehydes (for example, formaldehyde) and condensates thereof). The first organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring and a naphthalene ring. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (such as biphenyl, bisphenylalkane, and bisphenylsulfone). Examples of the aromatic compound include compounds having the aromatic ring and at least one selected from the group consisting of a hydroxy group and an amino group. The hydroxy group or the amino group may be directly bonded to the aromatic ring, or may be bonded as an alkyl chain having a hydroxy group or an amino group. Note that the hydroxy group also encompasses salts of a hydroxy group (-OMe). The amino group also encompasses salts of an amino group (specifically, salts with anions). Examples of Me include alkali metals (such as Li, K, and Na) and Group 2 metals of the periodic table (such as Ca and Mg).

As the aromatic compound, a bisarene compound [such as a bisphenol compound, a hydroxybiphenyl compound, a bisarene compound having an amino group (such as a bisarylalkane compound having an amino group, a bisarylsulfone compound having an amino group, or a biphenyl compound having an amino group), a hydroxyarene compound (such as a hydroxynaphthalene compound or a phenol compound), or an aminoarene compound (such as an aminonaphthalene compound or an aniline compound (such as an aminobenzenesulfonic acid or an alkylaminobenzenesulfonic acid))] is preferable. The aromatic compound may further have a substituent. The first organic expander may contain one or more or a plurality of residues of these compounds. As the bisphenol compound, bisphenol A, bisphenol S, bisphenol F, or the like is preferable.

The first organic expander may contain a condensate containing at least a unit of an aromatic compound having the sulfur-containing group. The condensate may contain at least a unit of a bisphenol compound as a unit of an aromatic compound. The sulfur-containing group may be directly bonded to the aromatic ring contained in the compound, or may be bonded to the aromatic ring, for example, as an alkyl chain having a sulfur-containing group.

In addition, as the first organic expander, for example, at least a condensate containing at least one selected from the group consisting of units of the bisarene compound and units of a monocyclic aromatic compound (such as a hydroxyarene compound and/or aminoarene compound) may be used. The first organic expander may contain at least a condensate containing a unit of a bisarene compound and a unit of a monocyclic aromatic compound (especially, a hydroxyarene compound). Examples of such a condensate include condensates of a bisarene compound and a monocyclic aromatic compound with an aldehyde compound. As the hydroxyarene compound, a phenol sulfonic acid compound (such as phenol sulfonic acid or a substituted product thereof) is preferable. As the aminoarene compound, aminobenzenesulfonic acid, alkylaminobenzenesulfonic acid, or the like is preferable. As the monocyclic aromatic compound, a hydroxyarene compound is preferable.

The sulfur element content of the first organic expander is 2000 µmol/g or more. The upper limit of the sulfur element content of the first organic expander is not particularly limited, and may be 9000 µmol/g or less, 8000 µmol/g or less, or 7000 µmol/g or less from the viewpoint of further suppressing the electrolyte solution decrease.

The weight average molecular weight (Mw) of the first organic expander may be 7000 or more. The Mw of the first organic expander is, for example, 100,000 or less, and may be 20,000 or less.

In the present specification, the Mw of the organic expander is a value measured using sodium polystyrene sulfonate as a standard substance. The Mw of the organic expander is measured using gel permeation chromatography (GPC).

The mass percentage of the first organic expander in the total of the first organic expander and the second organic expander is, for example, 50% by mass or more, may be 75% by mass or more, or may be 85% by mass or more. The mass percentage of the first organic expander is 100% by mass or less.

### (Second Organic Expander)

The sulfur element content in the second organic expander is less than 2000 µmol/g, and may be 1000 µmol/g or less or 800 µmol/g or less. The lower limit of the sulfur element content in the second organic expander is not particularly limited, and is, for example, 400 µmol/g or more.

Examples of the second organic expander include lignin compounds and synthetic organic expanders. Examples of the synthetic organic expanders include the synthetic organic expanders exemplified as the first organic expander. However, the sulfur element content of the synthetic organic expander is less than 2000 µmol/g. As the second organic expander, a lignin compound may be used. The negative electrode material may contain one kind or two or more kinds of the second organic expanders.

Examples of the lignin compound include lignin and lignin derivatives. Examples of the lignin derivative include lignin sulfonic acid and salts thereof. Examples of the salt of lignin sulfonic acid include alkali metal salts (such as sodium salt).

The Mw of the second organic expander is, for example, less than 7000. The Mw of the second organic expander is, for example, 3000 or more.

The content of the organic expander in the negative electrode material (total content of the first organic expander and the second organic expander) is, for example, 0.01% by mass or more. The content of the organic expander is, for example, 1% by mass or less and may be 0.5% by mass or less. The content of the first organic expander in the negative electrode material may be in the above-mentioned range.

### (Carbonaceous Material)

As the carbonaceous material, carbon black, graphite, hard carbon, soft carbon, or the like can be used. Examples of the carbon black include acetylene black, furnace black, and lamp black. Furnace black also encompasses ketjen black (product name). Graphite is a carbonaceous material containing a graphite-type crystal structure. The graphite may be either artificial graphite or natural graphite. The negative electrode material may contain one kind or two or more kinds of carbonaceous materials.

The content of the carbonaceous material in the negative electrode material is, for example, 0.05% by mass or more and may be 0.1% by mass or more. The content of the carbonaceous material may be, for example, 5% by mass or less.

### (Barium Sulfate)

The content of barium sulfate in the negative electrode material is, for example, 0.05% by mass or more and may be 0.1% by mass or more. The content of barium sulfate is, for example, 3% by mass or less.

### (Ratio Cn/Cp)

In the flooded-type lead-acid battery, the theoretical capacity ratio Cn/Cp of the electrode material may be 0.8 or more. From the viewpoint of further reducing the amount of electrolyte solution decrease, the ratio Cn/Cp is preferably more than 0.8, more preferably 0.9 or more. It is considered that as Cn increases, the gas absorption efficiency in the negative electrode plate increases and the electrolyte solution decrease is further suppressed. The ratio Cn/Cp is preferably 1.3 or less from the viewpoints of obtaining an excellent electrolyte solution decrease suppression effect and easily obtaining a higher low rate discharge capacity.

Cn/Cp is the ratio of the theoretical capacity Cn of all the negative electrode materials included in one cell of the flooded-type lead-acid battery to the theoretical capacity of all the positive electrode materials included in the one cell. When the flooded-type lead-acid battery includes two or more cells, Cn/Cp is an average value of Cn/Cp values determined for the two cells. When the flooded-type lead-acid battery includes three or more cells, Cn/Cp is an average value of Cn/Cp values determined for one cell located at the end part and one cell located near the center of the flooded-type lead-acid battery.

First, the total mass of the positive electrode materials and the total mass of the negative electrode materials contained in the cell are determined for each theoretical capacity. Cp and Cn are determined by multiplying each total mass by the theoretical capacity per g of the electrode material (positive electrode: 0.224 Ah/g, negative electrode: 0.259 Ah/g), and Cn/Cp is calculated.

The total mass of each electrode material is determined by the following procedures.

### (Total Mass of Positive Electrode Material)

A lead-acid battery in a full charged state is disassembled to obtain a positive electrode plate to be analyzed. The obtained positive electrode plate is washed with water to remove the sulfuric acid component from the positive electrode plate. The washing with water is performed until it is confirmed that when a pH test paper is pressed against the surface of the positive electrode plate washed with water, the color of the pH test paper no longer changes. The positive electrode plate washed with water is dried in a thermostatic chamber at 50°C ± 2°C for 12 hours or more. After drying, when a sticking member is included in the positive electrode plate, the sticking member is removed from the positive electrode plate by peeling. The mass of the dried product (positive electrode plate) is measured. Next, the positive electrode material is removed from the positive current collector, and the positive electrode material adhering to the positive current collector is removed by mannitol treatment. The obtained positive current collector is washed with water and dried, and then the mass of the positive current collector is measured. The mass of the positive electrode material is determined by subtracting the mass of the positive current collector from the mass of the positive electrode plate. The mass of the positive electrode material in the cell is determined by summing the masses of the positive electrode materials for all the positive electrode plates in the cell. The value of the mass of the positive electrode material determined in this manner is used for calculating Cp and the Cn/Cp ratio.

### (Total Mass of Negative Electrode Material)

First, the lead-acid battery in a full charged state is disassembled to obtain a negative electrode plate to be analyzed. The obtained negative electrode plate is washed with water to remove the sulfuric acid component from the negative electrode plate. The washing with water is performed until it is confirmed that when a pH test paper is pressed against the surface of the negative electrode plate washed with water, the color of the pH test paper no longer changes. However, the washing with water is performed within two hours. The negative electrode plate washed with water is dried at 60°C ± 5°C in a reduced pressure environment for about 6 hours. After drying, when a sticking member is included in the negative electrode plate, the sticking member is removed by peeling. The mass of the dried product (negative electrode plate) is measured. Next, the negative electrode material is scraped off and separated from the negative current collector to obtain a sample (hereinafter, referred to as a sample B).

From the negative current collector from which the negative electrode material is scraped off as described above, the negative electrode material is further removed, and the negative current collector is rubbed with a brush or the like to remove the negative electrode material adhering to the negative current collector. The obtained negative current collector is washed with water and dried, and then the mass of the negative current collector is measured. The mass of the negative electrode material is determined by subtracting the mass of the negative current collector from the mass of the negative electrode plate. The mass of the negative electrode material in the cell is determined by summing the masses of the negative electrode materials for all the negative electrode plates in the cell. The value of the mass of the negative electrode material determined in this manner is used for calculating Cn and the Cn/Cp ratio.

### (Others)

A non-chemically converted negative electrode plate is prepared, for example, by applying or filling a negative electrode paste to or in a negative current collector, followed by curing and drying. The negative active material in a charged state is spongy lead, but the non-chemically converted negative electrode plate is usually prepared using lead powder. More specifically, the negative electrode paste used for preparing a non-chemically converted negative electrode plate is prepared, for example, by adding water and sulfuric acid (or an aqueous sulfuric acid solution) to a lead powder, a first organic expander, and, if necessary, various additives (such as a second organic expander and a carbonaceous material), followed by mixing. At the time of curing, it is preferable to cure the non-chemically converted negative electrode plate at a higher temperature than room temperature and high humidity. The negative electrode plate is prepared by, for example, chemically converting the non-chemically converted negative electrode plate.

The chemical conversion may be performed, for example, by storing the element including the non-chemically converted negative electrode plate and the electrolyte solution containing sulfuric acid in the container of the lead-acid battery and charging the element in a state where the electrolyte solution is soaked into the element. However, the chemical conversion may be performed before the lead-acid battery or the element is assembled. The chemical conversion produces spongy lead.

### (Analysis or Measurement of Negative Electrode Material)

The analysis or measurement of the negative electrode material is performed using the negative electrode plate taken out from the lead-acid battery in a full charged state.

The sample B described above is used for analysis or measurement. The sample B is ground if necessary and subjected to analysis of constituent components of the negative electrode material.

### (Analysis of Constituent Components in Negative Electrode Material)

### (a) Qualitative Analysis of Organic Expander in Negative Electrode Material

A predetermined amount of the ground sample B is collected, and the amount of the sample is measured. The sample is immersed in a 1 mol/L aqueous NaOH solution to extract the organic expander. Next, the first organic expander and the second organic expander are separated from the extract. From each separated material containing each organic expander, insoluble components are removed by filtration, and the obtained solution (hereinafter, also referred to as a solution C) is desalted, then concentrated, and dried. The desalting is performed by using a desalting column, by passing the solution C through an ion-exchange membrane, or by placing the solution C in a dialysis tube and immersing the solution in distilled water. The solution is dried to obtain a powder of the organic expander (hereinafter, also referred to as a sample D).

The organic expander is specified by combining information obtained from an infrared spectroscopic spectrum of the sample D, an ultraviolet-visible absorption spectrum of a solution obtained by dissolving the sample D in distilled water or the like, a nuclear magnetic resonance (NMR) spectrum of a solution obtained by dissolving the sample D in a solvent such as heavy water, or gas chromatography mass spectrometry (GC-MS) capable of obtaining information on individual compounds constituting the substance, or the like.

The first organic expander and the second organic expander are separated from the extract as follows. First, the extract is measured by infrared spectroscopy, NMR, and/or GC-MS to determine whether or not a plurality of types of organic expanders is contained. Next, the molecular weight distribution of the extract is measured by GPC, and if the plurality of types of organic expanders can be separated by molecular weight, the organic expanders are separated by column chromatography based on a difference in molecular weight. When it is difficult to separate the organic expanders due to the difference in molecular weight, one of the organic expanders is separated by a precipitation separation method using a difference in solubility that varies depending on the type of the functional group and/or the amount of the functional group of the organic expander. Specifically, an aqueous sulfuric acid solution is added dropwise to a mixture obtained by dissolving the extract in an aqueous NaOH solution to adjust the pH of the mixture, thereby aggregating and separating one of the organic expanders. From the separated material dissolved again in the aqueous NaOH solution, insoluble components are removed by filtration as described above. The remaining solution after separating one of the organic expanders is concentrated. The obtained concentrate contains the other organic expander, and insoluble components are removed from the concentrate by filtration as described above.

### (b) Quantitative Determination of Content of Organic Expander in Negative Electrode Material

Similarly to the above (a), for each separated material containing the organic expander, a solution C is obtained after removing insoluble components by filtration. The ultraviolet-visible absorption spectrum of each obtained solution C is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is to be measured, sometimes the structural formula of the organic expander cannot be strictly specified, as a result of which the identical organic expander cannot be used for the calibration curve. In this case, the content of the organic expander is measured using the ultraviolet-visible absorption spectrum by creating a calibration curve using a separately available organic compound which exhibits an ultraviolet-visible absorption spectrum, an infrared spectroscopic spectrum, an NMR spectrum, and the like similar in shape to those of the organic expander extracted from the negative electrode of the battery.

### (c) Content of Sulfur Element in Organic Expander

Similarly to the above (a), after a powder sample D of the organic expander is obtained, sulfur element in 0.1 g of the organic expander is converted into sulfuric acid by an oxygen combustion flask method. At this time, the powder sample is burned in a flask containing an adsorbing liquid to obtain an eluate in which sulfate ions are dissolved in the adsorbing liquid. Next, the eluate is titrated with barium perchlorate using thorin as an indicator to determine the content (C1) of the sulfur element in 0.1 g of the organic expander. Next, C1 is multiplied by 10 to calculate the content (µmol/g) of the sulfur element per g of the organic expander.

### (d) Quantitative Determination of Carbonaceous Material and Barium Sulfate

To 10 g of the ground sample B, 50 mL of nitric acid having a concentration of 20% by mass is added, followed by heating for about 20 minutes to dissolve the lead component as lead ions. By filtration of the obtained solution, solids such as a carbonaceous material and barium sulfate are filtered off.

The obtained solids are dispersed in water to form a dispersion, and then components other than the carbonaceous material or barium sulfate (for example, reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of the carbonaceous material and barium sulfate. By subtracting the mass of the membrane filter from the total mass of the mixed sample (hereinafter, referred to as a sample E) and the membrane filter which have been dried, the mass (Mₘ) of the sample E is measured. Thereafter, the sample E is placed in a crucible together with the membrane filter and is burned and incinerated at 1300°C or higher. The remaining residue is barium oxide. The mass of barium sulfate (M_{B}) is determined by converting the mass of barium oxide to the mass of barium sulfate. The mass of the carbonaceous material is calculated by subtracting the mass M_{B} from the mass Mₘ. The percentages of the obtained mass of barium sulfate and the obtained mass of the carbonaceous material in the mass of the sample B are determined. Thus, the content of barium sulfate and the content of the carbonaceous material in the negative electrode material are determined.

### (Separator)

The separator can be disposed between the negative electrode plate and the positive electrode plate. As the separator, at least one selected from a nonwoven fabric and a microporous membrane, or the like is used.

The nonwoven fabric is a mat in which fibers are intertwined without being woven and is mainly composed of fibers. In the nonwoven fabric, for example, 60% by mass or more of the nonwoven fabric is formed of fibers. As the fibers, there can be used glass fibers, polymer fibers (such as polyolefin fibers, acrylic fibers, or polyester fibers (such as polyethylene terephthalate fibers)), or pulp fibers. Among them, glass fibers are preferable. The nonwoven fabric may contain components other than the fibers (for example, an acid resistant inorganic powder and a polymer as a binder), and the like.

The microporous membrane is a porous sheet mainly made of components other than fiber components and is obtained by, for example, extrusion molding a composition containing a pore-forming additive into a sheet shape and then removing the pore-forming additive to form pores. The microporous membrane is preferably formed of a material having acid resistance, and is preferably a microporous membrane composed mainly of a polymer component. As the polymer component, a polyolefin (such as polyethylene or polypropylene) is preferable. Examples of the pore-forming additive include at least one selected from the group consisting of polymer powders and oils.

The separator may be, for example, composed of only a nonwoven fabric or composed of only a microporous membrane. The separator may be, when required, a stacked article of a nonwoven fabric and a microporous membrane, an article obtained by bonding different or the same kind of materials, or an article obtained by engaging recesses and projections to each other in different or the same kind of materials.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded portions are along the horizontal direction of the lead-acid battery (for example, such that the folded portions may be parallel to the horizontal direction), or the separator may be disposed such that the folded portions are along the vertical direction (for example, such that the folded portions are parallel to the vertical direction). In the separator folded in the bellows shape, recesses are alternately formed on both main surface sides of the separator. Since the lug parts are usually formed on the upper parts of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (that is, a double separator is interposed between the adjacent positive electrode plate and negative electrode plate). When the separator is disposed such that the folded portions are along the vertical direction of the lead-acid battery, the positive electrode plate can be stored in the recess on one main surface side, and the negative electrode plate can be stored in the recess on the other main surface side (that is, the separator can be interposed singly between the adjacent positive electrode plate and negative electrode plate). When the bag-shaped separator is used, the bag-shaped separator may store the positive electrode plate or may store the negative electrode plate.

The separator may include at least a rib (first rib) protruding toward the positive electrode plate. The separator may include a rib (second rib) protruding toward the negative electrode plate, if necessary. Each of the first rib and the second rib is formed in a portion facing the electrode material. The separator usually includes a base part. In the separator including the rib, the rib protrudes from the surface of the base part. The base part of the separator is a portion of the part configuring the separator excluding protrusions such as ribs, and refers to a sheet-like portion that defines the outer shape of the separator.

The average height of the first ribs may be 0.3 mm or more. From the viewpoint of securing a high capacity, the average height of the first ribs may be 1.0 mm or less or 0.7 mm or less.

The separator may include a plurality of first ribs. The plurality of first ribs may extend, for example, along the longitudinal direction of the separator.

In the present specification, the longitudinal direction of the separator is a direction along the vertical direction (in other words, the height direction of the plate) in the flooded-type lead-acid battery storing the separator. An acute angle formed by an average direction in which the first ribs extend and the height direction of the plate (or the vertical direction in the flooded-type lead-acid battery) is, for example, 30° or less, and may be 15° or less. The average direction in which the first ribs extend and the height direction of the plate (or the vertical direction in the lead-acid battery) may be parallel to each other.

The average interval between the first ribs may be 1.3 cm or less, or may be 1.0 cm or less. The average interval of the first ribs is an average interval between adjacent first ribs. The average interval of the first ribs may be 4 mm or more.

The average interval of the first ribs is measured using the sample A which is a separator for measurement. More specifically, the intervals between the adjacent first ribs are measured with a caliper at a plurality of positions of the separator included in the element, and averaged. When the battery includes a plurality of elements, each average interval of the first ribs is determined for one of the outermost elements and one of the elements near the center, and the average intervals are further averaged.

The average height of the second ribs may be 0.10 mm or less, or may be 0.05 mm or less. The average height of the second ribs may be 0.02 mm or more. The separator need not include the second rib.

The separator may include a plurality of second ribs. Similarly to the case of the first rib, the plurality of second ribs may extend along the longitudinal direction of the separator. The average interval of the plurality of second ribs may be selected from the range described for the first ribs.

The separator may include a rib (third rib) other than the first rib on a main surface (first main surface) on which the first rib is formed. The third rib is a rib formed in a first main surface region which does not face the positive electrode material. The separator may include a rib (fourth rib), if necessary, formed in a region not facing the negative electrode material on a main surface (second main surface) opposite to the main surface on which the first rib is formed. When the separator includes the second rib, the second rib is formed in a second main surface region facing the negative electrode material.

The average thickness of the base part may be 0.10 mm or more, or may be 0.15 mm or more. The average thickness of the base part may be 0.30 mm or less.

### (Electrolyte Solution)

The electrolyte solution is an aqueous solution containing sulfuric acid. If necessary, the electrolyte solution may contain a polymer that swells in the electrolyte solution. The electrolyte solution preferably has fluidity at an operating temperature, and is more preferably liquid at 25°C.

The electrolyte solution may contain cations (for example, metal cations) and/or anions (for example, anions other than a sulfate anion (such as a phosphate ion)), if necessary. Examples of the metal cation include at least one selected from the group consisting of a Na ion, a Li ion, a Mg ion, and an Al ion.

From the viewpoint of easily suppressing the permeation short circuit, the concentration of the metal cation in the electrolyte solution may be 0.03 mol/L or more. From the viewpoint of ensuring high charge acceptability in regenerative charge, the concentration of the metal cation in the electrolyte solution may be 0.5 mol/L or less, 0.3 mol/L or less, or 0.1 mol/L or less.

The density of the electrolyte solution at 20°C in the lead-acid battery in a full charged state may be, for example, 1.20 g·cm⁻³ or more. The density of the electrolyte solution at 20°C may be 1.35 g·cm⁻³ or less. Here, the density of the electrolyte solution is the density of the electrolyte solution (more specifically, the aqueous sulfuric acid solution) in a state of not containing additives such as metal cations added to the electrolyte solution.

### (Others)

In the element, the number of positive electrode plates may be the same as, one less than, or one more than the number of negative electrode plates. In order to increase the ratio Rb, the number of the plurality of positive electrode plates configuring the element may be the same as the number of the plurality of negative electrode plates or one more than the number of the negative electrode plates. For example, a positive electrode plate may be disposed at one end part in the stacking direction of the element, and a negative electrode plate may be disposed at the other end part. Alternatively, the positive electrode plates may be disposed at both end parts in the stacking direction of the element. The positive electrode plate may be contained in a bag-shaped separator. In general, in order to ensure low-temperature high-rate performance, the negative electrode plates are often disposed at both end parts in the stacking direction of the element.

The lead-acid battery may include one cell or two or more cells. When the lead-acid battery includes a plurality of cells (in other words, a plurality of elements), the plurality of elements may be connected in series.

In a lead-acid battery, the opening of a container is usually closed with a lid body. The lid body includes, for example, a negative electrode terminal and a positive electrode terminal. The lid body may have a single structure (single lid), or may have a double structure including an inner lid and an outer lid (or upper lid). The lid having the double structure may have a reflux structure between the inner lid and the outer lid for returning the electrolyte solution into the battery (inside the inner lid) through a reflux port provided in the inner lid.

The flooded-type lead-acid battery can be obtained, for example, by a manufacturing method including a step of storing an element and an electrolyte solution in a cell chamber of a container. Each cell of the flooded-type lead-acid battery includes the element and the electrolyte solution stored in each cell chamber. The element is assembled by, for example, stacking a positive electrode plate, a negative electrode plate, and a separator such that the separator is interposed between the positive electrode plate and the negative electrode plate prior to storage in the cell chamber. The positive electrode plate, the negative electrode plate, and the separator each are usually prepared prior to the assembly of the element. The electrolyte solution is prepared prior to storage in the cell chamber. When the flooded-type lead-acid battery includes one element, the container does not need to be divided into a plurality of cell chambers, and the element and the electrolyte solution may be stored in the container.

A method for manufacturing the flooded-type lead-acid battery may include a step of chemically converting at least one of the positive electrode plate or the negative electrode plate, if necessary, after the step of storing the element and the electrolyte solution in the cell chamber.

Fig. 1 schematically illustrates an appearance and an internal structure of an example of a flooded-type lead-acid battery according to one aspect of the present invention. However, the lead-acid battery according to one aspect of the present disclosure is not limited only to the following embodiment.

A flooded-type lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. The opening of the container 12 is closed with a lid 15 including a positive electrode terminal 16 and a negative electrode terminal 17. A vent plug 18 is provided in the lid 15 for each cell chamber. At the time of water addition, the vent plug 18 is removed, and a liquid for water addition is supplied. The vent plug 18 may have a function of releasing gas generated in the cell chamber 14 to the outside of the battery.

The element 11 is configured by alternately stacking a plurality of negative electrode plates 3 and a plurality of positive electrode plates 2 with a separator 4 interposed therebetween. Here, the separator 4 has a bag shape, with one positive electrode plate 2 packaged in one separator 4. However, the form of the separator is not particularly limited. In the cell chamber 14 located at one end part of the container 12, a positive electrode shelf 6 connecting lug parts 2a of a plurality of positive electrode plates 2 in parallel is connected to a penetrating connection body 8, and a negative electrode shelf 5 connecting lug parts 3a of a plurality of negative electrode plates 3 in parallel is connected to a negative pole 7. The negative pole 7 is connected to the negative electrode terminal 17 outside the lid 15. In the cell chamber 14 located at the other end part of the container 12, a positive pole 9 is connected to the positive electrode shelf 6, and the penetrating connection body 8 is connected to the negative electrode shelf 5. The positive pole 9 is connected to the positive electrode terminal 16 outside the lid 15. Each of the penetrating connection bodies 8 passes through a through-hole provided in the partition 13 to connect the elements 11 of the adjacent cell chambers 14 in series.

The positive electrode shelf 6 is formed by welding the lug parts 2a, provided on the upper parts of the respective positive electrode plates 2, to each other by, for example, a cast-on-strap method or a burning method. The negative electrode shelf 5 is also formed by welding the lug parts 3a, provided on the upper parts of the respective negative electrode plates 3, to each other in accordance with the case of the positive electrode shelf 6.

The lid 15 of the lead-acid battery has a single structure (single lid), but is not limited to the illustrated example. For example, the lid 15 may have a double structure as described above. The lid having a double structure may have a reflux structure.

### [Examples]

Hereinafter, the present invention is specifically described on the basis of examples and comparative examples, but the present invention is not limited to only the following examples.

### << Flooded-Type Lead-Acid Batteries E1 to E20 and C1 to C20 >>

### (1) Preparation of Lead-Acid Battery

### (a) Preparation of Negative Electrode Plate

A lead powder, water, dilute sulfuric acid, an organic expander (first organic expander or second organic expander) having a sulfur element content shown in the table, barium sulfate, and carbon black were mixed to obtain a negative electrode paste. At this time, the amounts of the organic expander, barium sulfate, and carbon black were adjusted such that the contents of the respective components in a negative electrode material, all of which are determined by the procedures described above, were 0.2% by mass, 0.6% by mass, and 0.3% by mass, respectively. A mesh portion of an expanded grid made of a Pb-Ca-Sn alloy was filled with the negative electrode paste, which was then cured and dried. At this time, the density of the negative electrode paste was adjusted such that the ratio Cn/Cp determined by the procedures described above was a value shown in the table. Thus, a non-chemically converted negative electrode plate was obtained.

### (b) Preparation of Positive Electrode Plate

A lead powder, water, and dilute sulfuric acid were mixed to obtain a positive electrode paste. A mesh portion of an expanded grid made of a Pb-Ca-Sn alloy as a positive current collector was filled with the positive electrode paste, which was then cured and dried. At this time, the density of the positive electrode paste was adjusted such that the ratio Cn/Cp determined by the procedures described above was a value shown in the table. Thus, a non-chemically converted positive electrode plate was obtained.

### (c) Preparation of Flooded-Type Lead-Acid Battery

A battery has a nominal voltage of 12 V (6 cells) and a rated 20 hour rate capacity of 60 Ah. An element of the battery included seven positive electrode plates and eight negative electrode plates. First, non-chemically converted positive electrode plates were stored in bag-shaped separators, and alternately stacked with negative electrode plates. The obtained element including the non-chemically converted plates was stored in a container together with an electrolyte solution (aqueous sulfuric acid solution), and subjected to chemical conversion in the container to prepare a flooded-type lead-acid battery. At this time, the ratio Ra determined by the procedures described above was adjusted using a spacer so as to be a value shown in the table. Without containing additives such as metal cations, the density of the electrolyte solution at 20°C in the lead-acid battery in a full charged state was adjusted to 1.285 g ·cm⁻³. The lead-acid battery was fully charged by the above chemical conversion.

### (2) Evaluation

The following evaluation was performed using a battery having a nominal voltage of 12 V (6 cells) produced in examples or comparative examples. When the following evaluation is performed using another battery, the evaluation is performed at a voltage corresponding to the number of cells of the battery.

### (a) Amount of Electrolyte Solution Decrease

The mass (M₀) of the battery was measured. The battery was subjected to constant voltage charge at 14.4 V and an upper limit current of 50 A for 42 days in a water bath at 60°C ± 2°C. When the height of the electrolyte solution reached the lower level line of electrolyte solution during charge, water was added to the upper level line of electrolyte solution, and the amount of water addition was recorded. After charge, the battery taken out from the water bath was allowed to stand until the temperature reached room temperature (20 to 35°C), and then the mass (M₁) of the battery was measured. The amount of electrolyte solution decrease was determined by subtracting M₁ from M₀, and adding the total value (Mₐ) of the amounts of water additions. In Tables 1 and 4, the amount of electrolyte solution decrease of each battery was evaluated using a relative value with the amount of electrolyte solution decrease of the battery C2 defined as 100. The smaller the relative value is, the more the electrolyte solution decrease is suppressed.

### (b) High-Temperature Resistance

On each battery whose mass M₁ was measured in the above (a), discharge (high rate discharge) was performed at a constant current of 100 × I₂₀ (A) at a temperature of -18°C ± 2°C, and the time until the terminal voltage of the battery reached 6 V (discharge duration time) was determined. The longer the discharge duration time, the better the high-temperature resistance. The high-temperature resistance of each battery was evaluated using a relative value with the discharge duration time of the battery C2 defined as 100. Here, Iₙ is a current value (unit: A) corresponding to a value obtained by dividing a rated n-hour rate capacity (unit: Ah) of the battery by n.

### (c) PSOC Life Performance

The PSOC life performance of the flooded-type lead-acid battery was evaluated by the following procedures. All steps were carried out in a water bath at 25°C ± 1°C.

Steps 1 to 7 were repeated. The number of cycles when the end-of-discharge voltage in step 3 was lower than 10 V was determined with the charge in step 2 and the discharge in step 3 defined as one cycle. The PSOC life performance of each battery was evaluated using a relative value with the number of cycles of the battery C18 defined as 100. The larger this value is, the better the PSOC life performance is. Here, Iₙ is a current value (unit: A) corresponding to a value obtained by dividing a rated n-hour rate capacity (unit: Ah) of the battery by n.

Step 1 (conditioned discharge): Discharge was performed at a current of 4 × I₂₀ A for 2.5 hours.

Step 2 (charge): The upper limit current was set to 7 × I₂₀ A, and charge was performed at a constant voltage of 14.4 V for 40 minutes.

Step 3 (discharge): Discharge was performed at a current of 7 × I₂₀ A for 30 minutes.

Step 4: Step 2 and step 3 were repeated for 85 cycles.

Step 5 (charge): The upper limit current was set to 2 × I₂₀ A, and charge was performed at a constant voltage of 16.0 V for 18 hours.

Step 6 (discharge): Discharge was performed at a current of I₂₀ A until the voltage reached 10.5 V.

Step 7 (charge): The upper limit current was set to 5 × I₂₀ A, and charge was performed at a constant voltage of 16.0 V for 24 hours.

Tables 1 to 4 show the evaluation results. In these tables, E1 to E20 are examples, and C1 to C20 are comparative examples.

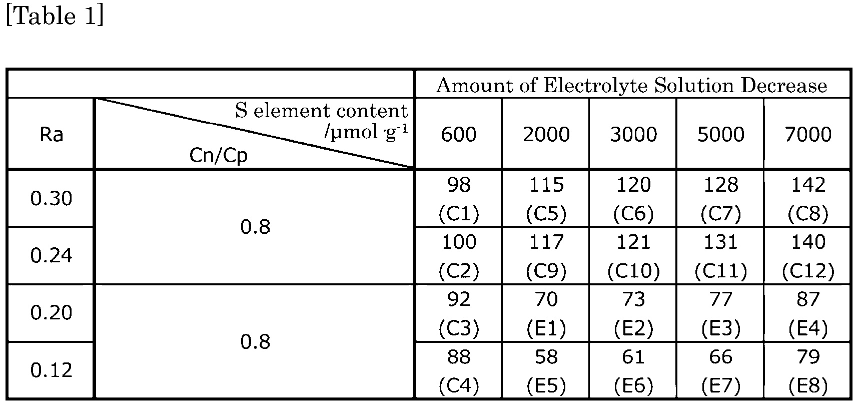

As shown in Table 1, when Ra > 0.20, the amount of electrolyte solution decrease was larger in the case of using the first organic expander than in the case of using the second expander. When Ra ≤ 0.20, the amount of electrolyte solution decrease was reduced to some extent even when the second organic expander was used. On the other hand, when the first organic expander was used at Ra ≤ 0.20, the amount of electrolyte solution decrease was remarkably reduced, and the amount of electrolyte solution decrease was significantly reduced as compared with the case where the second organic expander was used. From the results in Table 1, when Ra > 0.20 and Ra ≤ 0.20, the behavior of the electrolyte solution decrease was completely different depending on the type of the organic expander.

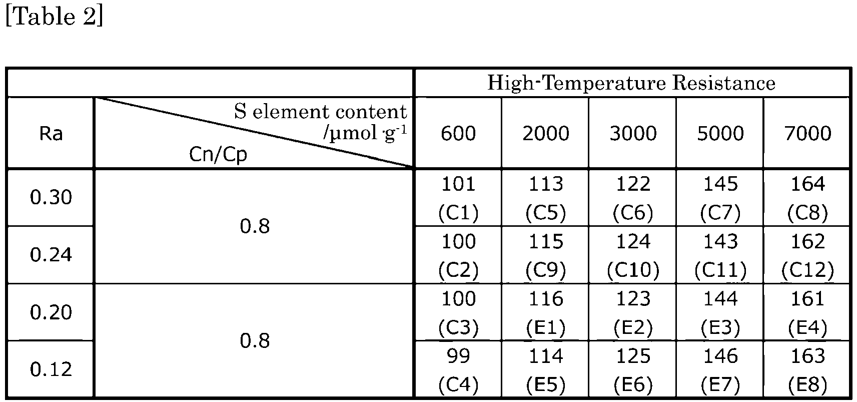

As shown in Table 2, in the case of using the first organic expander, higher high-temperature resistance was obtained than in the case of using the second organic expander.

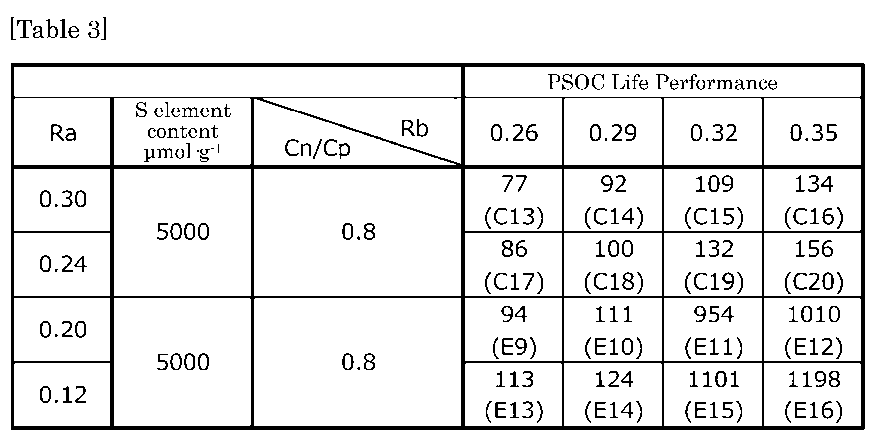

As shown in Table 3, in the case of Ra ≤ 0.20, the PSOC life performance was improved as compared with the case of Ra > 0.20. When Ra ≤ 0.20 and Rb ≥ 0.30 (E11, E12, E15, and E16), remarkably high PSOC life performance was obtained as compared with the case of Ra > 0.20 or the case of Rb < 0.30. However, when Ra > 0.20, the effect of improving the PSOC life performance was small even when Rb ≥ 0.30. It is considered that the remarkably high PSOC life performance is obtained when Ra ≤ 0.20 and Rb ≥ 0.30 because stratification is remarkably suppressed.

**[Table 4]**

| Battery No. | Ra | S element content µmol ·g⁻¹ | Cn/Cp | Amount of Electrolyte Solution Decrease |
|---|---|---|---|---|
| C2 | 0.24 | 600 | 0.8 | 100 |
| E17 | 0.20 | 5000 | 0.8 | 77 |
| E18 | | | 0.9 | 58 |
| E19 | | | 1.0 | 57 |
| E20 | | | 1.1 | 57 |

As shown in Table 4, when the ratio Cn/Cp increased, the amount of electrolyte solution decrease tended to decrease. When Cn/Cp > 0.8 (preferably Cn/Cp ≥ 0.9), the amount of electrolyte solution decrease was further reduced. Since the effect of reducing the amount of electrolyte solution decrease tended to plateau as the ratio Cn/Cp increased, the ratio Cn/Cp is preferably 1.3 or less.

### INDUSTRIAL APPLICABILITY

The flooded-type lead-acid battery according to one aspect of the present invention is suitable for applications including charge-discharge at PSOC. Examples of such applications include power sources for applications in which charge-discharge is controlled at PSOC. Examples of applications in which charge-discharge is controlled at PSOC include a vehicle equipped with an idle reduction system as a lead-acid battery for IS, a charge control application, and an auxiliary equipment application for a vehicle. Further, the lead-acid battery can be suitably used as, for example, a power source for starting a vehicle (such as an automobile or motorcycle), a power source for auxiliary equipment of a vehicle, and an industrial energy storage apparatus (for example, a power source of an electric vehicle (such as a forklift) or the like). These are merely examples, and the application of the flooded-type lead-acid battery is not limited only to these.

### DESCRIPTION OF REFERENCE SIGNS

1: Flooded-type lead-acid battery
2: Positive electrode plate
2a: Lug part of positive electrode plate
3: Negative electrode plate
3a: Lug part of negative electrode plate
4: Separator
5: Negative electrode shelf
6: Positive electrode shelf
7: Negative pole
8: Penetrating connection body
9: Positive pole
11: Element
12: Container
13: Partition
14: Cell chamber
15: Lid
16: Positive electrode terminal
17: Negative electrode terminal
18: Vent plug

## Claims

1. A flooded-type lead-acid battery,
the flooded-type lead-acid battery comprising: an element, an electrolyte solution, and a cell chamber that stores the element and the electrolyte solution,
wherein the element includes a positive electrode plate, a negative electrode plate, and a separator interposed between the positive electrode plate and the negative electrode plate,
the positive electrode plate contains a positive electrode material,
the negative electrode plate contains a negative electrode material,
the negative electrode material contains an organic expander having a sulfur element content of 2000 µmol/g or more, and
in a cross section, parallel to a bottom part of the cell chamber, of the flooded-type lead-acid battery, a ratio Ra (= Se/Sg) of an area Se (= S1 - Sg), which is obtained by subtracting a cross-sectional area Sg of the element from a cross-sectional area S1 inside the cell chamber, to the cross-sectional area Sg of the element is 0.20 or less.

2. The flooded-type lead-acid battery according to claim 1, wherein in the cross section, a ratio Rb (= Sp/S1) of a cross-sectional area Sp of the positive electrode plate to a cross-sectional area S1 inside the cell chamber is 0.30 or more.

3. The flooded-type lead-acid battery according to claim 2, wherein the Rb is 0.32 or more.

4. The flooded-type lead-acid battery according to claim 1 or 2, wherein a ratio (= Cn/Cp) of a theoretical capacity Cn of the negative electrode material to a theoretical capacity Cp of the positive electrode material is more than 0.8.

5. The flooded-type lead-acid battery according to claim 4, wherein the ratio Cn/Cp is 1.3 or less.
